# EUROPEAN PATENT APPLICATION

(11) **EP 4 613 251 A1**
(43) Date of publication of application: **10.09.2025**
(21) Application number: 24162316.4
(22) Date of filing: 08.03.2024
(51) Int. Cl.: A61G 5/10, B60T 7/12

(54) **METHOD OF CONTROLLING A PARKING BRAKE OF A POWER WHEELCHAIR**

(71) Applicant: Permobil AB, 861 23 Timrå (SE)
(72) Inventor: Forsberg, Fredrik, 857 52 Sundsvall (SE)
(74) Representative: Kransell & Wennborg KB

(57) **Abstract**

A method of inhibiting a parking brake of a power wheelchair, the power wheelchair comprising drive motors and drive wheels configured to be driven by a respective one of the drive motors, a control system configured to control the drive motors, and a sensor system configured to measure one or more parameters associated with motion of the power wheelchair when the power wheelchair is stationary relative to a surface on which it stands, and/or an inclination of the power wheelchair when the power wheelchair is stationary relative to the surface on which it stands, the method comprising: a) determining whether the drive wheels are at standstill, b) determining whether a drive command from the control system to the drive motors to drive the drive wheels is present, c) determining, based on a measurement of the one or more parameters by the sensor system, whether the power wheelchair is at an angle with an absolute value greater than zero relative to the horizontal plane and/or if the power wheelchair is in motion relative to the Earth, and d) inhibiting the parking brake from engaging one of the drive wheels unless it is determined that A) the absolute value of the angle is greater than zero and/or the power wheelchair is in motion relative to the Earth, and B) the drive wheels are at standstill, and no drive command to drive the drive wheels is present.

## Description

### TECHNICAL FIELD

The present disclosure generally relates to power wheelchairs.

### BACKGROUND

A power wheelchair may have a parking brake that engages when the power wheelchair reaches standstill. Engaging and disengaging electronically controlled parking brakes normally make a distinct and audible noise. In an indoor environment, for example, a user may start and stop the power wheelchair often, e.g., in the kitchen when moving back and forth between the refrigerator and the table. In fact, every small correction and activation or deactivation of the drive controls, e.g., touching the joystick, will disengage and engage the parking brake. Thus, since the parking brake may be engaged and disengaged hundreds of times in a single day, the sounds may become disturbing to the user, especially in a quiet environment.

### SUMMARY

A general object of the present disclosure is to provide a method of controlling a parking brake of a power wheelchair which solves or at least mitigates the problems of the prior art.

There is hence according to a first aspect provided a method of inhibiting a parking brake of a power wheelchair, the power wheelchair comprising drive motors and drive wheels configured to be driven by a respective one of the drive motors, a control system configured to control the drive motors, and a sensor system configured to measure one or more parameters associated with motion of the power wheelchair when the power wheelchair is stationary relative to a surface on which it stands, and/or an inclination of the power wheelchair when the power wheelchair is stationary relative to the surface on which it stands, the method comprising: a) determining whether the drive wheels are at standstill, b) determining whether a drive command from the control system to the drive motors to drive the drive wheels is present, c) determining, based on a measurement of the one or more parameters by the sensor system, whether the power wheelchair is at an angle with an absolute value greater than zero relative to the horizontal plane and/or if the power wheelchair is in motion relative to the Earth, and d) inhibiting the parking brake from engaging with one of the drive wheels unless it is determined that A) the absolute value of the angle is greater than zero and/or the power wheelchair is in motion relative to the Earth, and B) the drive wheels are at standstill, and no drive command to drive the drive wheels is present.

As a result, the parking brake engages only when assessed necessary. The number of times that the parking brake engages may thus be reduced substantially, resulting in a better experience for the user. For example, if the power wheelchair is in the kitchen on a horizontal floor, the parking brake will not engage at all.

According to one embodiment the sensor system comprises at least one of an inertia measurement unit, a rotary encoder, an accelerometer, a gyroscope, an optical sensor system, and current sensors.

According to one embodiment the parking brake is an electromagnetic brake or electromechanical brake.

According to one embodiment step d) involves engaging the parking brake only in case the absolute value is greater than a threshold value.

According to one embodiment the threshold value is the lowest absolute value of the angle required to make the power wheelchair start rolling on an inclined surface.

The threshold value may for example be in a range of 0.5° to 5°, such as 0.5° to 4°, such as 1° to 3°, such as 1° to 2°. Thus, if for example, the power wheelchair is on an inclined surface that has an inclination which is too small for the power wheelchair to start rolling and it is determined that the power wheelchair does not move relative to the Earth, then the parking brake will not engage. Thereby, unnecessary parking brake engagement may be avoided. The threshold value depends on the type of power wheelchair, motor type, control electronics, weight of the power wheelchair, motor brake action, etc.

There is according to a second aspect provided a computer program comprising computer code which when executed by processing circuitry of a control system causes the control system to perform the method of the first aspect.

There is according to a third aspect provided a control system for a power wheelchair, the control system comprising: processing circuitry, and a storage medium comprising computer code, which when executed by the processing circuitry causes the control system to perform the method of the first aspect.

There is according to a fourth aspect provided a wheelchair comprising: drive wheels, a parking brake configured to prevent at least one of the drive wheels from rotating, and a control system of the third aspect, configured to inhibit the parking brake from engaging with said one of the drive wheels.

One embodiment comprises a user operable drive control input unit configured to provide drive commands to the control system.

According to one embodiment the drive control input unit comprises a joystick, a foot controller, a head controller, an eye controller, or a sensory controller.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a sideview of a power wheelchair on an inclined surface relative to the horizontal plane;
Fig. 2 is a block diagram of functional blocks of a power wheelchair; and
Fig. 3 is a flowchart of a method of controlling a parking brake of a power wheelchair.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

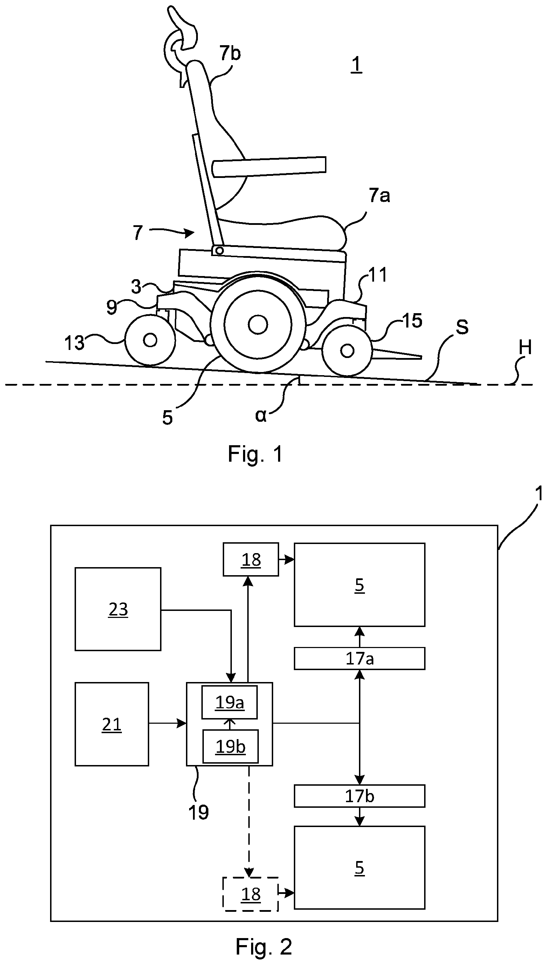

Fig. 1 shows an example of a power wheelchair 1. The exemplified power wheelchair 1 is a midwheel drive wheelchair but could alternatively be of any drive type such as a front-wheel drive power wheelchair, or a rear-wheel-drive power wheelchair.

The power wheelchair 1 comprises a chassis 3, and drive wheels 5 rotatable relative to the chassis 3, and a seating system 7 which may be manoeuvrable relative to the chassis 3. The seating system 7 may comprise a seat 7a and a backrest 7b.

The power wheelchair 1 may comprise swing arms, such as rear swing arms 9 and front swing arms 11, pivotably connected to the chassis 3. Additionally, the power wheelchair 1 may comprise rear and/or front caster wheels 13, 15 rotatably connected to the rear swing arms 9 and the front swing arms 11, respectively.

In Fig. 1, the power wheelchair 1 stands on an inclined surface S relative to the horizontal plane H. There is an angle α between the inclined surface S and the horizontal plane H, with the angle α, or at least its absolute value |α|, being greater than zero. This means, that if the absolute value |α| of the angle α is large enough, i.e., larger than a threshold value, and no braking of the power wheelchair 1 is provided, the power wheelchair 1 will start to roll down along the inclined surface S.

Another way for the power wheelchair 1 to start rolling relative the surface on which it stands, if no braking is provided, would be if the power wheelchair 1 is placed on a support surface which is arranged fixed in e.g., a vehicle, without fixating the power wheelchair 1 to the vehicle. If for example the vehicle accelerates or deaccelerates, the power wheelchair 1 could possibly start moving relative to the support surface in the vehicle, even if the support surface is horizontal.

Fig. 2 shows a block diagram of some functional blocks of the power wheelchair 1.

The power wheelchair 1 comprises drive motors 17a, 17b. Each drive motor 17a, 17b is configured to drive a respective one of the drive wheels 5. In the present example, the power wheelchair 1 has two drive wheels 5, and two drive motors 17a, 17b.

The power wheelchair 1 further comprises a control system 19, and a user operable drive control input unit 21. The user operable drive control input unit 23 is electrically connected to the control system 19. The control system 19 is configured to receive drive commands from the drive control input unit 21.

The drive control input unit 23 may for example comprise a joystick, a foot controller, a head controller, an eye controller, or a sensory controller. By user-manoeuvring one of these controllers, drive commands are generated by the drive control input unit 21 and transmitted to the control system 19.

The control system 19 is configured to control the drive motors 17a, 17b. The control system 19 is configured to control the drive motors 17a, 17b independently of each other. The control system 19 is configured to control the drive motors 17a, 17b based on the drive commands from the drive control input unit 21. The control system 1 controls the drive wheels 5 by means of the drive motors 17a, 17b.

The control system 19 comprises power converters such as frequency drives or frequency converters which are arranged to generate and inject current into respective stator windings of the drive motor 17a, 17b for driving the drive motors 17a, 17b based on drive commands from the drive control input unit 23.

The control system 19 is configured to transform the drive commands into control signals with speed reference and/or torque reference to the power converters, for driving the drive motors 17a, 17b.

The power wheelchair 1 comprises a parking brake 18, or in a variation, one parking brake 18 for each drive wheel 5. The parking brake 18 is configured to prevent one or more of the drive wheels 5 from rotating. The parking brake 18 may be an electromagnetic brake or electromechanical brake.

The control system 19 is configured to control the operation of the parking brake 18. The control system 19 is thus configured to control the parking brake 18 to engage. The control system 19 is also configured to inhibit engagement of the parking brake 18. In particular, the control system 19 is configured to inhibit the parking brake 18 unless certain conditions to be described herein are fulfilled.

According to one example, the control system 19 comprise two separate sub-control systems, wherein a first sub-control system may be dedicated to only control the parking brake(s) 18, and a second sub-control system, a drive control system, may be configured to control the drive motors 17a, 17b. According to another example, the control system 19 does not comprise separate sub-control systems, and instead comprises a single system configured to control both the drive motors 17a, 17b and the parking brake(s) 18.

The control system 19 comprises processing circuitry 19a. The processing circuitry 19a may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning control of the parking brake 18.

The control system 19 may comprise a storage medium 19b. The storage medium 19b may comprise a computer program including computer code which when executed by the processing circuitry 19a causes the control system 19 to perform a method as disclosed herein.

The storage medium 19b may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The power wheelchair 1 comprises a sensor system 23. The sensor system 23 is configured to measure one or more parameters associated with motion of the power wheelchair 1 when the power wheelchair 1 is stationary relative to a surface on which it stands, and/or an inclination of the power wheelchair 1 when the power wheelchair 1 is stationary relative to the surface on which it stands.

The sensor system 23 comprises at least one of an inertia measurement unit, a rotary encoder, an accelerometer, a gyroscope, an optical sensor system, and current sensors.

The sensor system 23 is connected to the control system 23 and is arranged to provide the one or more measured parameters to the control system 23.

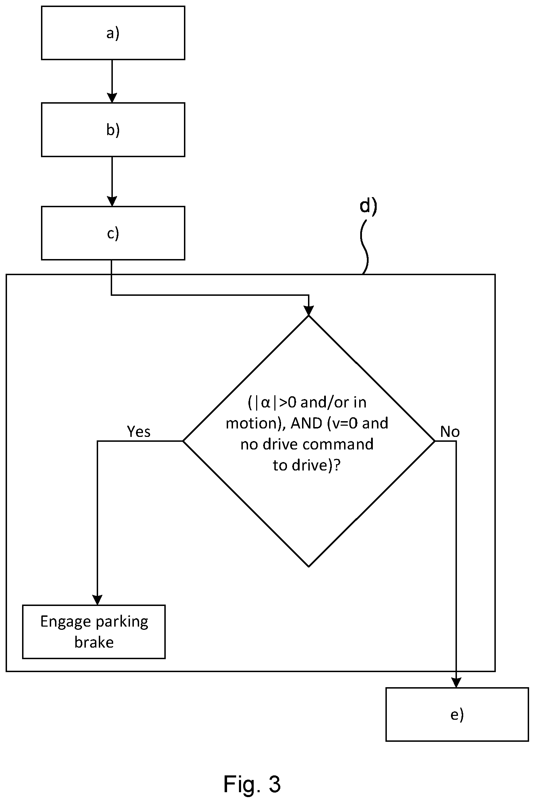

A method of inhibiting the parking brake 18 from engaging with the drive wheels 5, by means of the control system 19 will now be described with reference to Fig. 3.

In a step a) it is determined whether the drive wheels 5 are at standstill. The control system 19 may be configured to determine whether the drive wheels 5 are at standstill. For example, the control system 19 may receive measurements from current sensors arranged to measure a stator current in the drive motors 17a, 17b, or the control system 19 may be configured to determine estimations of the stator current. Based on the stator currents, the control system 19 may according to one example be configured to determine whether the drive wheels 5 are at a standstill. Alternatively, or additionally, rotary encoders may be provided on the drive wheels, or drive wheel axles to which the drive wheels are fitted, which send signals to the control system 19 for determining whether the drive wheels 5 are at a standstill. Other methods, as would be apparent to the skilled person, may be employed for determining whether the drive wheels are at standstill.

In a step b) it is determined whether a drive command from the control system 19, or in some examples the dedicated drive control system, to the drive motors 17a, 17b to drive the drive wheels 5 is present. The processing circuitry 19a may be arranged to determine whether a drive command to the drive motors 17a, 17b to drive the drive wheels 5 is present.

In a step c) it is determined whether the power wheelchair 1 is at an angle α with an absolute value |α| greater than zero relative to the horizontal plane H and/or if the power wheelchair 1 is in motion relative to the Earth, based on a measurement of the one or more parameters by the sensor system 23. The control system 19, i.e., the processing circuitry 19a, is configured to perform step c).

In a step d) the parking brake 18 is engaged by the control system 19 only in case it is determined that A) the absolute value |α| of the angle α is greater than zero and/or the power wheelchair 1 is in motion relative to the Earth, and B) the drive wheels 5 are at standstill, meaning that the rotor speed v of the drive motors 17a, 17b is v=o rpm, and no drive command to drive the drive wheels 5 is present. Thus, if all conditions defined under A) and B) are fulfilled, the control system 19 controls the parking brake 18 to engage, i.e., to prevent one or more of the drive wheels 5 from rotating. Otherwise, the control system 19 inhibits the parking brake 18 from engaging with a drive wheel 5. In this way, the power wheelchair 1 is prevented from rolling down the inclined surface S, and to roll relative to e.g., a horizontal support surface of an accelerating or deaccelerating vehicle.

According to one example, the parking brake 18 is in step d) only engaged if conditions A) and B) are fulfilled, with the addition that the parking brake 18 engages only in case the absolute value |αl of the angle α is greater than a threshold value. The threshold value may be the lowest absolute value |α| required to make the power wheelchair 1 start rolling on an inclined surface. The threshold value may for example have been determined based on empirical tests, for instance for common support surfaces indoor and outdoor under non-wet and non-icy conditions. The threshold value further prevents the parking brake 18 to engage in cases when the inclination is too low to cause the power wheelchair 1 to start rolling along an inclined surface.

In case not all the conditions set in A) and B) are fulfilled, a step e) is performed by the control system 19, which inhibits the parking brake 18 from engaging.

In one variation, a user of the power wheelchair 1 may be able to turn off the inhibiting feature of the control system 19 and the parking brake(s) 18. This may be desired, for example when a movement of the surroundings is expected, such when the power wheelchair 1 is on a train or on a bus where it is not completely quiet. In this case, the parking brake(s) 18 would engage when the power wheelchair 1 is at standstill with no drive command present.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of inhibiting a parking brake (18) of a power wheelchair (1), the power wheelchair (1) comprising drive motors (17a, 17b) and drive wheels (5) configured to be driven by a respective one of the drive motors (17a, 17b), a control system (19) configured to control the drive motors (17a, 17b), and a sensor system (23) configured to measure one or more parameters associated with motion of the power wheelchair (1) when the power wheelchair (1) is stationary relative to a surface on which it stands, and/or an inclination of the power wheelchair (1) when the power wheelchair (1) is stationary relative to the surface on which it stands, the method comprising:
a) determining whether the drive wheels (5) are at standstill,
b) determining whether a drive command from the control system (19) to the drive motors (17a, 17b) to drive the drive wheels (5) is present,
c) determining, based on a measurement of the one or more parameters by the sensor system (23), whether the power wheelchair (1) is at an angle (α) with an absolute value greater than zero relative to the horizontal plane (H) and/or if the power wheelchair (1) is in motion relative to the Earth, and
d) inhibiting the parking brake (18) from engaging with one of the drive wheels (5) unless it is determined that A) the absolute value of the angle (α) is greater than zero and/or the power wheelchair (1) is in motion relative to the Earth, and B) the drive wheels (5) are at standstill, and no drive command to drive the drive wheels (5) is present.

2. Method as claimed in claim 1, wherein the sensor system (23) comprises at least one of an inertia measurement unit, a rotary encoder, an accelerometer, a gyroscope, an optical sensor system, and current sensors.

3. Method as claimed in claim 1 or 2, wherein the parking brake (18) is an electromagnetic brake or electromechanical brake.

4. Method as claimed in any of the preceding claims, wherein step d) involves inhibiting the parking brake (18) unless the absolute value of the angle (α) is greater than a threshold value.

5. Method as claimed in claim 4, wherein the threshold value is the lowest absolute value of the angle (α) required to make the power wheelchair (1) start rolling on an inclined surface (S).

6. Computer program comprising computer code which when executed by processing circuitry (19a) of a control system (19) causes the control system (19) to perform the method as claimed in any of the preceding claims.

7. Control system (19) for a power wheelchair (1), the control system (19) comprising:
processing circuitry (19a), and
a storage medium (19b) comprising computer code, which when executed by the processing circuitry (19a) causes the control system (19) to perform the method as claimed in any of claims 1-5.

8. Power wheelchair (1) comprising:
drive wheels (5),
a parking brake (18) configured to prevent one of the drive wheels (5) from rotating, and
a control system (19) as claimed in claim 7, configured to inhibit the parking brake (18) from engaging with said one of the drive wheels (5).

9. Power wheelchair (1) as claimed in claim 8, comprising a user operable drive control input unit (21) configured to provide drive commands to the control system (19).

10. Power wheelchair (1) as claimed in claim 9, wherein the drive control input unit (21) comprises a joystick, a foot controller, a head controller, an eye controller, or a sensory controller.
